# FASCICULE DE BREVET EUROPEEN

(11) **EP 3 674 907 B1**
(45) Date de publication et mention de la délivrance du brevet: **13.01.2021**
(21) Numéro de dépôt: 19217622.0
(22) Date de dépôt: 18.12.2019
(51) Int. Cl.: G06F 13/40, H04B 5/00

(54) **PROCÉDÉ DE COMPENSATION D'UN OFFSET D'UN DISPOSITIF FONCTIONNANT NOTAMMENT SELON LE PROTOCOLE MIL-STD-1553**
KOMPENSATIONSVERFAHREN EINER ABWEICHUNG EINER VORRICHTUNG, DIE INSBESONDERE MIT EINEM MIL-STD-1553-PROTOKOLL FUNKTIONIERT
METHOD FOR COMPENSATION OF OFFSET OF A DEVICE OPERATING IN PARTICULAR ACCORDING TO THE MIL-STD-1553 PROTOCOL

(30) Priorité: 28.12.2018 FR 1874282
(43) Date de publication de la demande: 01.07.2020
(73) Titulaire: Thales, 92400 Courbevoie (FR)
(72) Inventeur: GORISSE, Hervé, 33700 Merignac (FR); EIDESHEIM, Jean, 33700 Merignac (FR); LE TEXIER, Olivier, 33700 Merignac (FR); MOUREAU, Enguerrand, 33700 Merignac (FR)
(74) Mandataire: Marks & Clerk France

(56) Documents cités:
- EP-A1- 3 393 088
- Anonymous: "HI-1585 - Holt Integrated Circuits, Inc.", , 9 octobre 2018 (2018-10-09), XP055627240, Extrait de l'Internet: URL:http://www.holtic.com/products/3107-hi -1585.aspx [extrait le 2019-09-30]
- XU JING ET AL: "Offset Manchester coding for Rayleigh noise suppression in carrier-distributed WDM-PONs", OPTICS COMMUNICATIONS, ELSEVIER, AMSTERDAM, NL, vol. 346, 16 février 2015 (2015-02-16), pages 106-109, XP029583090, ISSN: 0030-4018, DOI: 10.1016/J.OPTCOM.2015.02.030

## Description

Le domaine de l'invention est celui des communications avioniques. L'invention s'applique plus spécifiquement aux communications régies par la norme MIL-STD 1553B intitulée « Aircraft Internai Time Division Command/Response Multiplex Data Bus » signifiant « Bus de données multiplexé d'interrogation et de commande par partition temporelle pour aéronef ». De façon plus simple, on désignera, dans la suite de la description, par la dénomination « 1553 », le bus de communication lui-même, les composants associés ou le protocole de communications qui respecte cette norme.

Tout ce qui suit se réfère, à titre d'exemple, à la norme MIL-STD 1553. Cependant, le procédé décrit peut s'appliquer à toutes normes ayant des caractéristiques de signal d'émission/réception et des impératifs d'offset équivalents.

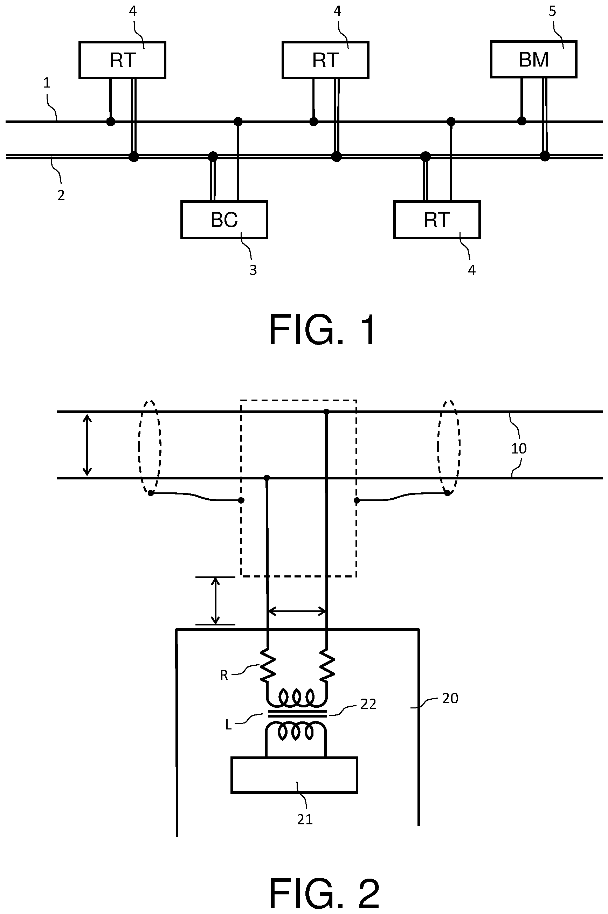

Le bus 1553 est un bus série très utilisé dans le domaine de l'avionique militaire et dans certains satellites de télécommunication et d'observation. La figure 1 représente le synoptique de fonctionnement de ce bus. La transmission d'un signal différentiel est réalisée sur une paire torsadée de conducteurs avec blindage à la masse. Comme on le voit sur cette figure, la norme propose la présence de deux bus notés 1 et 2 afin d'assurer la redondance, un bus étant actif à chaque instant. Sur ce bus sont connectés un « bus controller » 3 noté BC sur la figure 1, des « remote terminal » 4 notés RT sur la figure 1 et éventuellement un ou plusieurs « bus monitor » 5 noté BM sur cette même figure. Il peut y avoir jusqu'à 31 terminaux RT connectés à un même bus.

Le contrôleur BC a pour rôle de gérer les communications entre les différents terminaux RT. Le moniteur BM écoute le réseau de manière passive.

Le couplage du contrôleur, des terminaux et des moniteurs peut être assuré directement ou à travers un transformateur. La figure 2 représente le couplage direct d'une paire torsadée blindée 10 du bus au module transmission/réception 21 d'un de ces différents éléments 20. Le couplage entre la paire torsadée blindée 10 du bus et le module 21 comporte un transformateur d'isolement 22 comportant classiquement des résistances R et des bobines d'induction L.

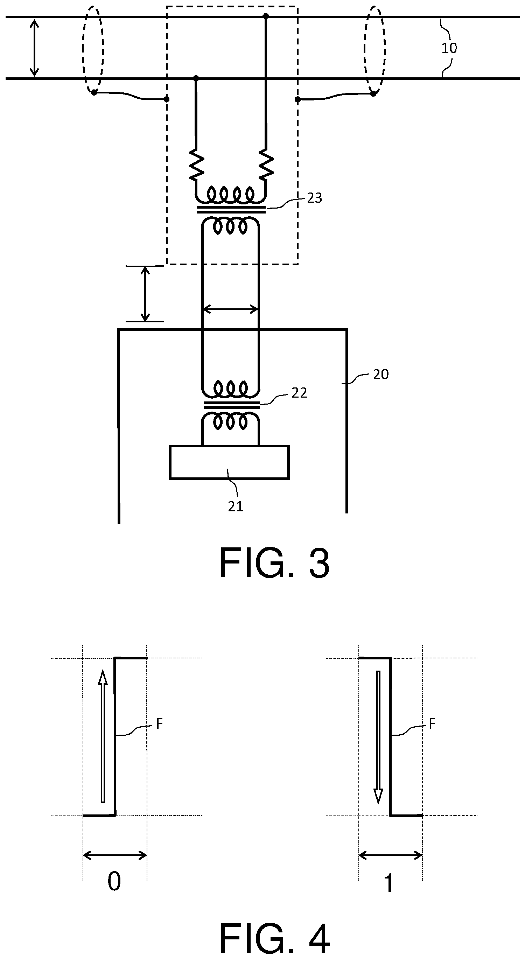

La figure 3 représente le même couplage bus 10 / terminal 20 mais à travers un second transformateur de couplage 23 situé au voisinage du bus.

Le couplage par transformateur présente un certain nombre d'avantages. Il permet d'avoir une distance plus grande entre l'élément connecté au bus et le bus lui-même. Cette distance peut être de 6 mètres au lieu de 30 centimètres pour un couplage direct. Il permet également d'avoir une meilleure isolation électrique, une meilleure adaptation d'impédance et de meilleures caractéristiques de réjection de bruit que le couplage direct. L'isolation électrique empêche un dysfonctionnement d'un terminal ou une désadaptation d'impédance d'affecter les performances du bus.

Les trames circulant sur le bus sont composées de mots de vingt bits codés par un système de codage dit « Manchester ». Ce codage est représenté sur la figure 4. Les bits sont codés par un front F et non par un niveau. Comme on le voit sr la partie gauche de la figure 4, un front montant code un « 0 » et, comme on le voit sur la partie droite, un front descendant code un « 1 ». Ces mots de la trame 1553 peuvent être des mots de commande, de données ou de statut. Si les durées des deux demi-bits d'un bit codé en Manchester étaient égales, la valeur moyenne du signal devrait être donc nulle.

Un mot d'une trame 1553 est fait de la manière suivante :
- une synchro montante ou descendante d'une durée de 3 bits ;
- une commande ou une donnée d'une durée de 16 bits ; et
- 1 bit de parité.

Le temps correspondant à la durée d'un bit est d'une microseconde. Cette période est créée à l'aide d'une fréquence plus importante qui permet de créer la période des demi-bits du codage Manchester.

Les composants utilisés pour les communications par bus 1553 peuvent présenter des non conformités qui les font sortir des gabarits normalisés lors des essais de qualification des matériels sur lesquels ils sont intégrés.

Le contrôleur de bus et les terminaux possèdent des transceivers qui assurent les conversions numérique/analogique et analogique/numérique. Le signal circulant sur le bus est analogique. Sa tension est comprise entre 18V et 27V crête en sortie du driver pour un couplage par transformateur.

Ce n'est donc pas un signal carré parfait. Il y a nécessairement un temps de montée/descente non nul entre les deux niveaux, et il peut exister une légère dissymétrie entre le niveau de tension positive et le niveau de tension négative.

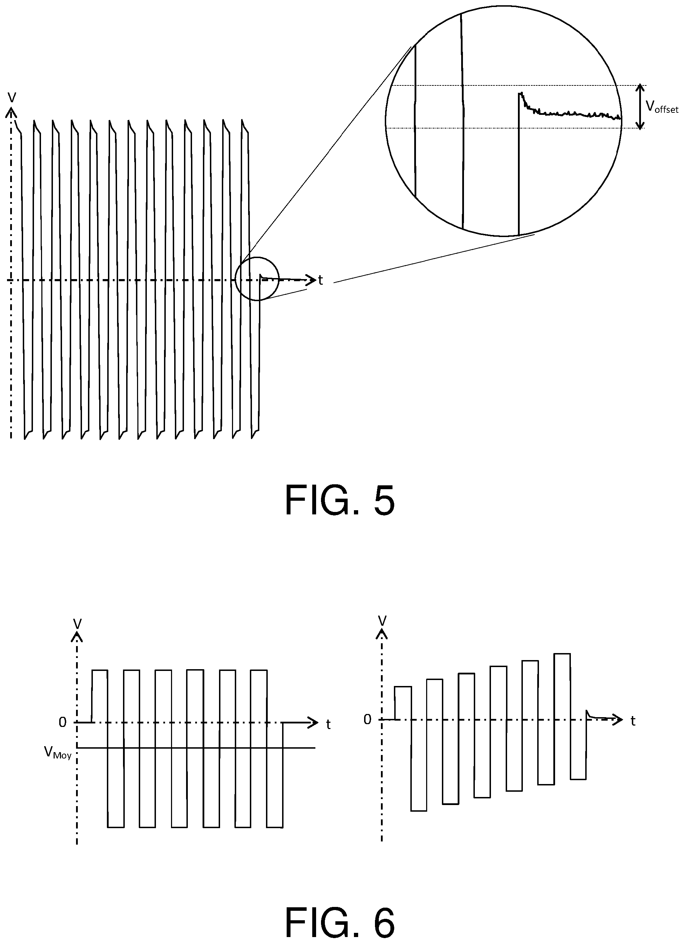

Ces inconvénients entrainent un pic de tension indésirable en fin de signal, lorsque la ligne doit revenir à l'état de repos. S'il excède le seuil de réception, ce pic de tension sera à tort interprété comme un « 0 » ou un « 1 », donc comme le début d'une nouvelle trame, là où justement la communication est terminée. C'est ce pic suivi d'une décroissance qui par abus de langage est appelé « offset ». Ce pic est connu sous l'appellation anglo-saxonne de « backswing ». La figure 5 illustre ce problème. Elle représente une trame 1553. Elle est représentée par une tension V fonction du temps t. Le cercle en haut à droite de la figure représente la fin du signal grossi cinq fois de façon à mettre en évidence la tension d'offset V_{offset} du signal.

On observe une dissymétrie entre les niveaux haut et bas de la tension du signal de sortie comme on le voit sur la partie gauche de la figure 6 qui représente la variation de la tension de sortie V en fonction du temps t du signal issu du « driver » du terminal avant son passage dans le transformateur.

Le signal a alors une aire négative supérieure à son aire positive. La valeur moyenne du signal V_{Moy} est donc négative. Le transformateur va supprimer progressivement la valeur moyenne du signal entrant, jusqu'à ce que celui-ci soit centré sur 0V comme on le voit sur la partie droite de la figure 6. C'est lors de la dernière remontée à 0V que l'offset se produit. L'offset apparait alors en étant la différence entre la valeur moyenne et le 0V, sachant que le transformateur ramène le signal à 0V, donc l'offset s'atténue avec le temps.

Pour éviter les problèmes liés à ce phénomène, la norme impose un seuil maximum de +/-250 mV d'offset, afin d'éviter que les récepteurs reçoivent de « faux » messages.

Le paragraphe 4.5.2.1.1.4 de la norme 1553, défini la mesure de cet offset à l'aide de six mots prédéfinis qui sont, exprimés en hexadécimal : 0x8000, 0x7FFF, 0x0000, 0xFFFF, 0x5555 et 0xAAAA, envoyés sur des trames successives de 33 mots. On émet ainsi 33 fois le mot 0x8000, puis on mesure un premier offset. On émet ensuite 33 fois le mot 0x7FFF, on mesure un second offset et ainsi de suite. Si une seule des six mesures dépasse les 250mV, le test est un échec.

Actuellement, si des composants électroniques destinés à être montés sur des cartes 1553 échouent à ce test de mesure d'offset, ils sont rebutés alors que leur fonctionnement est, par ailleurs, parfaitement sain.

L'objet de l'invention est un procédé de calibration de composant fonctionnant selon le protocole MIL-STD-1553 ou équivalent de façon à obtenir un offset final qui soit dans les tolérances de la norme appliquée. Ce procédé repose sur le fait qu'en jouant sur le rapport cyclique des bits du signal codés en Manchester, on joue en sortie sur la valeur de l'offset.

Plus précisément, l'invention a pour objet un procédé de compensation d'un offset de sortie d'un dispositif électronique d'émission/réception fonctionnant selon une norme de communications, le procédé de compensation comportant les étapes suivantes :
- Etape 1 : La norme définissant des mots standards composé de bits codés en Manchester, pour chaque mot standard, succession d'émissions dudit mot en décalant, pour chaque émission, zéro ou plusieurs instants de montée ou de descente de chaque bit, le décalage de l'instant de montée ou de descente ayant une valeur constante et indépendante du bit ;
- Etape 2 : Détermination de l'émission comportant zéro ou plusieurs instants décalés de montée ou de descente de chaque bit codé en Manchester permettant d'obtenir l'offset moyen le plus faible sur l'ensemble des mots standards ;
- Etape 3 : Mémorisation desdits décalages de montée ou de descente dans le dispositif électronique de façon que ces décalages de montée ou de descente soient appliqués aux signaux de sortie lorsque le dispositif électronique est opérationnel.

Avantageusement, l'étape 2 consiste à mesurer, pour chaque émission, l'offset correspondant à cette émission et à calculer, à partir de la connaissance de ces offsets, l'émission comportant zéro ou plusieurs instants décalés de montée ou de descente de chaque bit codé en Manchester permettant d'obtenir l'offset moyen le plus faible sur l'ensemble des mots standards.

Avantageusement, l'étape 2 consiste à déterminer, pour chaque mot standard, l'émission ou les émissions donnant une valeur absolue d'offset supérieure à une limite absolue d'offset déterminée par la norme et à calculer, à partir de la connaissance de ces émissions, l'émission comportant zéro ou plusieurs instants décalés de montée ou de descente de chaque bit codé en Manchester permettant d'obtenir l'offset moyen le plus faible sur l'ensemble des mots standards.

Avantageusement, l'absence de décalage de l'instant de montée ou de descente d'un bit correspond à un temps de montée ou de descente situé exactement au milieu de la durée du bit et que la présence d'un décalage d'un temps de montée ou de descente d'un bit correspond à un décalage temporel constant par rapport à ce dit milieu, ce décalage temporel étant effectué soit avant le milieu de la durée du bit, soit après.

Avantageusement, pour chaque mot standard émis dans l'étape 1, chaque émission diffère de la précédente par un et un seul décalage d'un temps de montée ou de descente.

Avantageusement, seuls les bits de données de messages émis comportent des décalages de leurs instants de montée ou de descente, les bits de synchronisation et le bit de parité étant inchangés, c'est-à-dire que le temps de montée ou de descente de ces bits de synchronisation ou de parité est situé exactement au milieu de la durée du bit.

Avantageusement, la norme de communications est la norme MIL-STD 1553.

L'invention concerne également un banc de calibration destiné à mettre en œuvre un procédé de compensation d'un offset de sortie d'un dispositif électronique d'émission/réception fonctionnant selon une norme de communications, ledit banc de contrôle comportant :
- Des premiers moyens de génération de mots standards définis par la norme, chaque mot étant composé de bits codés en Manchester ;
- Des seconds moyens de décalage de l'instant de montée ou de descente de chaque bit codé en Manchester, la durée du bit restant constante ;
- Des troisièmes moyens de détermination de l'émission comportant zéro ou plusieurs instants décalés de montée ou de descente de chaque bit codé en Manchester permettant d'obtenir l'offset moyen le plus faible sur l'ensemble des mots standards, le décalage α de l'instant de montée ou de descente ayant une valeur constante et indépendante du bit ;
- Des quatrièmes moyens de calcul et de mémorisation des paramètres de décalages permettant de minimiser l'offset.

Avantageusement, les troisièmes moyens consistent à mesurer, pour chaque émission, l'offset correspondant à cette émission et à calculer, à partir de la connaissance de ces offsets, l'émission comportant zéro ou plusieurs instants décalés de montée ou de descente de chaque bit codé en Manchester permettant d'obtenir l'offset moyen le plus faible sur l'ensemble des mots standards.

Avantageusement, les troisièmes moyens consistent à déterminer, pour chaque mot standard, l'émission ou les émissions donnant une valeur absolue d'offset supérieure à une limite absolue d'offset déterminée par la norme et à calculer, à partir de la connaissance de ces émissions, l'émission comportant zéro ou plusieurs instants décalés de montée ou de descente de chaque bit codé en Manchester permettant d'obtenir l'offset moyen le plus faible sur l'ensemble des mots standards.

L'invention sera mieux comprise et d'autres avantages apparaîtront à la lecture de la description qui va suivre donnée à titre non limitatif et grâce aux figures annexées parmi lesquelles :
La figure 1 représente le synoptique de fonctionnement d'un bus 1553 ;
La figure 2 représente le couplage direct d'une paire torsadée blindée du bus à un module transmission/réception ;
La figure 3 représente le couplage au travers d'un transformateur d'une paire torsadée blindée du bus à un module transmission/réception ;
La figure 4 représente le principe du codage « Manchester » ;
La figure 5 représente l'offset d'une trame 1553 ;
La figure 6 représente le passage d'un signal 1553 à travers un transformateur ;
La figure 7 représente le principe d'ajustement de l'offset selon l'invention ;
La figure 8 représente la fonction d'ajustement selon l'invention de l'instant de montée ou de descente d'un bit codé en Manchester ;
La figure 9 représente les variations de l'offset en fonction du paramètre d'ajustement ;
Les figures 10, 11 et 12 représentent trois cas représentatifs de l'exploitation des paramètres d'ajustement.

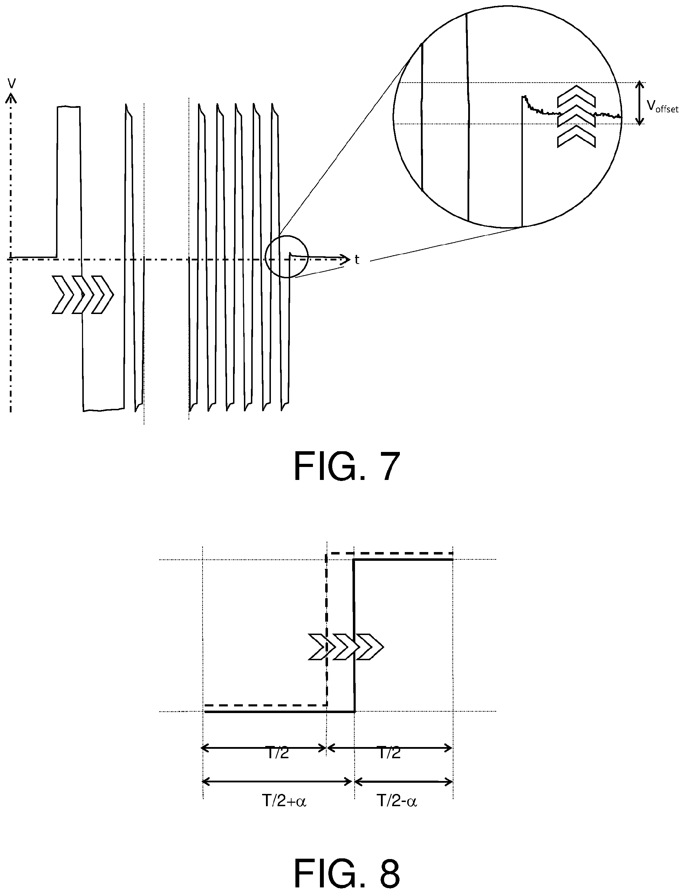

Comme on l'a vu, l'offset du signal de sortie dépend de la valeur moyenne du signal émis. A titre d'exemple, la figure 7 illustre cette dépendance. Elle représente une trame 1553 commençant par un signal de synchronisation. La trame est figurée par une tension T fonction du temps t. Le cercle en haut à droite de la figure représente la fin du signal grossi cinq fois de façon à mettre en évidence la tension d'offset du signal. Les chevrons horizontaux représentent les variations temporelles du signal de synchronisation. Les chevrons verticaux les variations de tension du signal d'offset. Lorsque l'on fait varier le signal de synchronisation, l'offset varie.

Ainsi, en réglant certaines durées du signal émis par un dispositif électronique émettant des signaux 1553, il est possible de faire varier l'offset du signal de sortie et bien entendu de ramener sa valeur dans les tolérances spécifiées par la norme. Le procédé selon l'invention de compensation d'un offset de sortie d'un dispositif électronique d'émission/réception fonctionnant selon le protocole MIL-STD-1553 repose sur ce principe.

En pratique, on fait uniquement varier le rapport cyclique des bits codés en Manchester du signal d'émission. Cette méthode présente l'avantage de ne pas toucher à la durée d'émission des bits.

Le principe est représenté sur la figure 8 qui représente l'amplitude d'un bit standard d'émission et l'amplitude d'un bit selon l'invention ; Le bit standard est représenté en traits pointillés et le bit selon l'invention est représenté par un trait continu. Dans les deux cas, les bits ont la même durée globale T et la même amplitude A. dans le cas présent, le bit représenté est un « zéro ».

Dans le cas d'un bit standard, le front montant se produit exactement à mi-durée du bit, c'est-à-dire après un temps égal à T/2. Dans le cas d'un bit selon l'invention, le front montant est décalé d'une durée a. Il se produit donc à l'instant T/2+α. Le paramètre α peut être positif ou négatif. Ce paramètre a une valeur constante et indépendante du bit.

Plus la fréquence d'utilisation de la compensation est élevée, et plus la variation possible de α est faible, et meilleure est la précision apportée à la correction de l'offset.

L'étape 1 du procédé selon l'invention reprend ce principe. Pour chaque mot standard défini par la norme, le banc de contrôle génère une succession d'émissions dudit mot en faisant varier, pour chaque émission, plusieurs instants de montée ou de descente de chaque bit codé en Manchester.

Afin de répartir l'altération du rapport cyclique sur un message standard 1553 de vingt bits, le décalage est introduit uniquement sur les bits de la partie « data » du message et une seule fois maximum par bit, ce qui donne un décalage maximum de ±16α. Ainsi, ni les bits de synchronisation, ni le bit de parité ne sont altérés. Ce décalage est suffisant pour introduire des variations d'offset nécessaires pour compenser les éventuels défauts du signal émis.

L'étape 2 du procédé selon l'invention consiste à déterminer l'émission comportant zéro ou plusieurs instants de montée ou de descente de chaque bit codé en Manchester permettant d'obtenir l'offset moyen le plus faible sur l'ensemble des mots standards.

Il existe différentes techniques pour assurer la mesure d'offset.

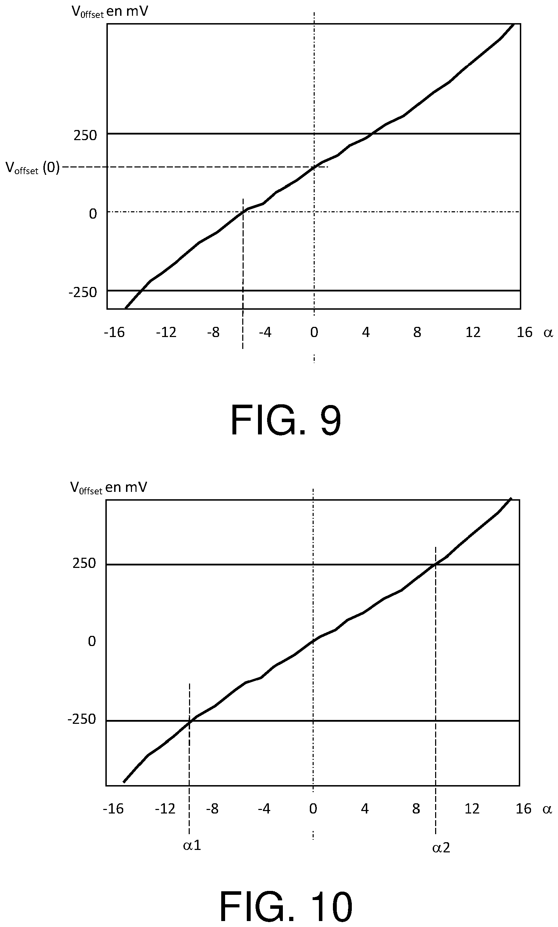

On peut mesurer directement l'offset pour chaque émission de signal. Ainsi, le graphique de la figure 9 représente en trait gras la variation de l'offset en mV d'un signal de sortie d'un dispositif électronique fonctionnant selon la norme 1553 en fonction du nombre de fois où le paramètre de décalage α est appliqué. Comme on l'a vu, il peut être appliqué 16 fois en négatif et 16 fois en positif. Le trait en pointillés horizontal représente l'offset zéro. Le trait en pointillés vertical représente la valeur zéro du paramètre a. Pour cette valeur, tous les bits du message sont émis de façon standard ou encore, aucune correction n'est appliquée sur le signal d'émission. Sur a courbe de la figure 9, l'offset vaut alors +160 mV. Les deux traits horizontaux représentent les valeurs minimale et maximal de l'offset tolérées par la norme, soit - 250 mV et + 250 mV. Quad on fait varier le nombre de fois où le paramètre α est appliqué, l'offset varie. Sur la figure 9, il varie entre -300 mV et + 600 mV. Il existe donc une valeur de α pour laquelle l'offset est nul ou voisin de zéro. Dans le cas présent, cette valeur vaut -6.

Il existe une autre façon de déterminer le paramètre α permettant de réduire l'offset au voisinage de 0 mV. Il faut rechercher, pour les mots indiqués par la norme, les valeurs seuils α, en positif et en négatif du rapport cyclique qui conduisent à une erreur d'interprétation de la trame 1553.

Pour cela, les mots de la norme sont envoyés sur les sorties TX et les entrées RX du dispositif électronique que l'on teste. Un lien RX permet de recevoir des données de l'extérieur, mais permet également une réécoute local du lien TX associé. Les liens se comportent comme des paires différentielles lors des échanges, mais ont un niveau à 0 lorsqu'il n'y a pas d'échange. Ces entrées et ces sorties sont observées, après un certain délai, après la fin d'émission afin de déterminer s'il y a eu ou non offset à ce moment-là. Le délai est, par exemple, de 2 µs. Si le mot de sortie présente un changement, cela signifie que la valeur de l'offset a été dépassée. Selon la valeur de ce changement, on connaît le signe de la valeur de l'offset. Avec cette méthode, on ne peut pas déterminer la valeur de l'offset, mais on peut déterminer les deux valeurs α1 et α2 correspondant peu ou prou aux valeurs d'offset de -250 mV et de +250 mV.

Les figures 10, 11 et 12 représentent trois cas représentatifs de l'exploitation de ces valeurs α1 et α2. Chaque figure représente la variation de l'offset en fonction du paramètre a. Les deux traits pleins horizontaux représentent les valeurs minimale et maximal de l'offset tolérées par la norme, soit - 250 mV et + 250 mV. Chaque fois que, pour une valeur de α, l'offset dépasse en valeur absolue une de ces valeurs, cela déclenche un signal d'erreur. On détecte ainsi les valeurs α1 et α2.

Plus ces valeurs α sont de signe opposé et éloigné de 0, plus le signal nécessite un décalage important du rapport cyclique pour générer un offset, et donc meilleure est la qualité du dispositif. La figure 10 en est un exemple. Sur cette figure, a1 vaut -10 et a2 vaut +9. Il faut appliquer une variation de rapport cyclique de -10α pour perturber le récepteur dans un sens, et de +9α pour perturber le récepteur dans l'autre sens. Dans ce cas, le dispositif ne nécessite pas nécessairement de correction.

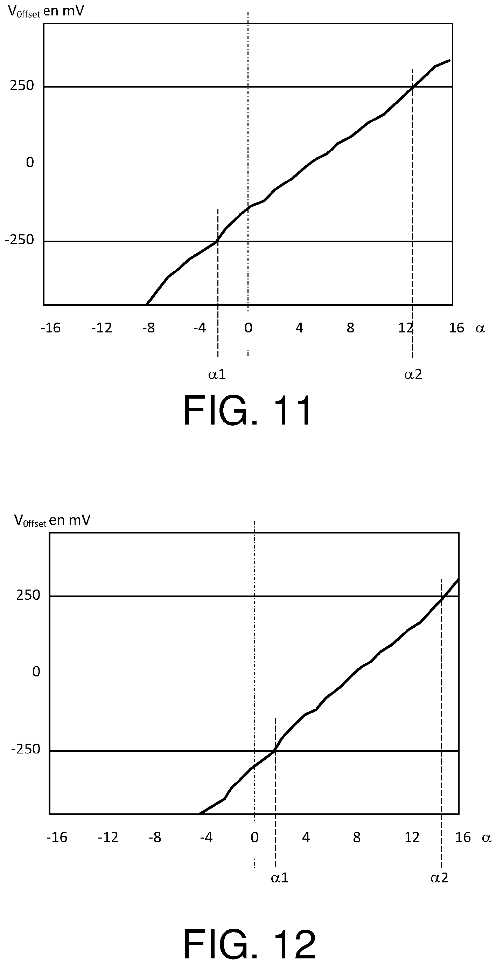

A l'inverse, si une des deux valeurs α1 et α2 est proche de 0 comme on le voit sur la figure 11 où α1 vaut -3 et α2 vaut +13, plus le dispositif a tendance à générer un offset hors norme. En effet, le comportement des composants évolue en température avec pour effet d'augmenter ou de diminuer ces valeurs d'offset. Dans ce cas, il est préférable d'apporter une correction.

Enfin, si les deux valeurs d'offset sont de même signe comme on le voit sur la figure 12 où α1 vaut +2 et α2 vaut +14, alors la correction est nécessaire, sinon le dispositif sera rebuté.

Dans une troisième étape, les valeurs α sont mémorisées dans le dispositif électronique de façon que ces instants soient appliqués aux signaux de sortie lorsque le dispositif électronique est opérationnel. Il est à noter que la correction en temps réel est impossible dans la mesure où il faudrait détecter au moins un message d'erreur pour corriger les suivants et donc laisser passer au moins un signal erroné.

Les deux tableaux I et II ci-dessous représentent, sur deux dispositifs mesurés, les valeurs des offsets en fonction des six mots prédéfinis de la norme 1553 avant compensation et après compensation par le procédé selon l'invention.

Les offsets du dispositif du tableau I sont tous dans la norme avant compensation. Cependant, après compensation, l'offset est voisin de zéro. Le dispositif sera donc moins soumis aux dérives d'offset dues aux aléas thermiques.

Un des offsets du dispositif du tableau II est hors norme avant compensation. Après compensation, l'offset est revenu dans la norme et le dispositif peut être utilisé sans problème.

**TABLEAU I**

| Data | Offset en mV avant compensation | Offset moyen en mV avant compensation | Offset en mV après compensation | Offset moyen en mV après compensation |
|---|---|---|---|---|
| 0x8000 | 160 | 151 | 21 | 17 |
| 0x7fff | 122 | | -19 | |
| 0x0 | 207 | | 63 | |
| 0xffff | 127 | | 7 | |
| 0xaaaa | 128 | | 4 | |
| 0x5555 | 161 | | 28 | |

**TABLEAU II**

| Data | Offset en mV avant compensation | Offset moyen en mV avant compensation | Offset en mV après compensation | Offset moyen en mV après compensation |
|---|---|---|---|---|
| 0x8000 | 242 | 227 | 1 | -21 |
| 0x7fff | 206 | | -46 | |
| 0x0 | **287** | | 41 | |
| 0xffff | 208 | | -38 | |
| 0xaaaa | 193 | | -56 | |
| 0x5555 | 226 | | -25 | |

Comme il a été dit, le procédé selon l'invention peut s'appliquer sans difficultés majeures pour l'homme du métier à des normes voisines de la norme MIL-STD 1553 comportant, par exemples, des structures de messages différents ou des mots standards différents ou des codages de bits différents.

Le procédé est mis en œuvre sur un banc de calibration comportant au moins les éléments suivants :
- Des premiers moyens de génération de mots standards définis par la norme, chaque mot étant composé de bits codés en Manchester ;
- Des seconds moyens de décalage de l'instant de montée ou de descente de chaque bit codé en Manchester, la durée du bit restant constante ;
- Des troisièmes moyens de détermination de l'émission comportant zéro ou plusieurs instants décalés de montée ou de descente de chaque bit codé en Manchester permettant d'obtenir l'offset moyen le plus faible sur l'ensemble des mots standards ;
- Des quatrièmes moyens de calcul et de mémorisation des paramètres de décalages permettant de minimiser l'offset.

Dans un premier mode de réalisation, les troisièmes moyens consistent à mesurer, pour chaque émission, l'offset correspondant à cette émission et à calculer, à partir de la connaissance de ces offsets, l'émission comportant zéro ou plusieurs instants décalés de montée ou de descente de chaque bit codé en Manchester permettant d'obtenir l'offset moyen le plus faible sur l'ensemble des mots standards.

Dans un second mode de réalisation, les troisièmes moyens consistent à déterminer, pour chaque mot standard, l'émission ou les émissions donnant une valeur absolue d'offset supérieure à une limite absolue d'offset déterminée par la norme et à calculer, à partir de la connaissance de ces émissions, l'émission comportant zéro ou plusieurs instants décalés de montée ou de descente de chaque bit codé en Manchester permettant d'obtenir l'offset moyen le plus faible sur l'ensemble des mots standards.

Ces moyens électroniques ne présentent aucune difficulté particulière pour l'homme du métier.

## Revendications

1. Procédé de compensation d'un offset de sortie d'un dispositif électronique d'émission/réception fonctionnant selon une norme de communications, le procédé de compensation comportant les étapes suivantes :
- Etape 1 : La norme définissant des mots standards composé de bits codés en Manchester, pour chaque mot standard, succession d'émissions dudit mot en décalant, pour chaque émission, zéro ou plusieurs instants (T/2+α) de montée ou de descente de chaque bit, le décalage α de l'instant de montée ou de descente ayant une valeur constante et indépendante du bit ;
- Etape 2 : Détermination de l'émission comportant zéro ou plusieurs instants décalés de montée ou de descente de chaque bit codé en Manchester permettant d'obtenir l'offset moyen (V_{offset}) le plus faible sur l'ensemble des mots standards ;
- Etape 3 : Mémorisation desdits décalages (α) de montée ou de descente dans le dispositif électronique de façon que ces décalages de montée ou de descente soient appliqués aux signaux de sortie lorsque le dispositif électronique est opérationnel.

2. Procédé de compensation d'un offset de sortie selon la revendication 1, **caractérisé en ce que** l'étape 2 consiste à mesurer, pour chaque émission, l'offset correspondant à cette émission et à calculer, à partir de la connaissance de ces offsets, l'émission comportant zéro ou plusieurs instants décalés de montée ou de descente de chaque bit codé en Manchester permettant d'obtenir l'offset moyen le plus faible sur l'ensemble des mots standards.

3. Procédé de compensation d'un offset de sortie selon la revendication 1, **caractérisé en ce que** l'étape 2 consiste à déterminer, pour chaque mot standard, l'émission ou les émissions donnant une valeur absolue d'offset supérieure à une limite absolue d'offset déterminée par la norme et à calculer, à partir de la connaissance de ces émissions, l'émission comportant zéro ou plusieurs instants décalés de montée ou de descente de chaque bit codé en Manchester permettant d'obtenir l'offset moyen le plus faible sur l'ensemble des mots standards.

4. Procédé de compensation d'un offset de sortie selon l'une des revendications précédentes, **caractérisé en ce que** l'absence de décalage de l'instant de montée ou de descente d'un bit correspond à un temps de montée ou de descente situé exactement au milieu de la durée du bit et que la présence d'un décalage d'un temps de montée ou de descente d'un bit correspond à un décalage temporel constant par rapport à ce dit milieu, ce décalage temporel étant effectué soit avant le milieu de la durée du bit, soit après.

5. Procédé de compensation d'un offset de sortie selon l'une des revendications précédentes, **caractérisé en ce que**, pour chaque mot standard émis dans l'étape 1, chaque émission diffère de la précédente par un et un seul décalage d'un temps de montée ou de descente.

6. Procédé de compensation d'un offset de sortie selon l'une des revendications précédentes, **caractérisé en ce que** seuls les bits de données de messages émis comportent des décalages de leurs instants de montée ou de descente, les bits de synchronisation et le bit de parité étant inchangés, c'est-à-dire que le temps de montée ou de descente de ces bits de synchronisation ou de parité est situé exactement au milieu de la durée du bit.

7. Procédé de compensation d'un offset de sortie selon l'une des revendications précédentes, **caractérisé en ce que** la norme de communications est la norme MIL-STD 1553.

8. Banc de calibration adapté à mettre en œuvre un procédé de compensation d'un offset de sortie d'un dispositif électronique d'émission/réception fonctionnant selon une norme de communications, ledit banc de contrôle comportant :
- Des premiers moyens de génération de mots standards définis par la norme, chaque mot étant composé de bits codés en Manchester ;
- Des seconds moyens de décalage de l'instant (T/2+α) de montée ou de descente de chaque bit codé en Manchester, la durée du bit restant constante, le décalage α de l'instant de montée ou de descente ayant une valeur constante et indépendante du bit ;
- Des troisièmes moyens de détermination de l'émission comportant zéro ou plusieurs instants décalés de montée ou de descente de chaque bit codé en Manchester permettant d'obtenir l'offset moyen (V_{offset}) le plus faible sur l'ensemble des mots standards ;
- Des quatrièmes moyens de calcul et de mémorisation des paramètres de décalage (α) permettant de minimiser l'offset.

9. Banc de calibration selon la revendication 8, **caractérisé en ce que** les troisièmes moyens consistent à mesurer, pour chaque émission, l'offset correspondant à cette émission et à calculer, à partir de la connaissance de ces offsets, l'émission comportant zéro ou plusieurs instants décalés de montée ou de descente de chaque bit codé en Manchester permettant d'obtenir l'offset moyen le plus faible sur l'ensemble des mots standards.

10. Banc de calibration selon la revendication 8, **caractérisé en ce que** les troisièmes moyens consistent à déterminer, pour chaque mot standard, l'émission ou les émissions donnant une valeur absolue d'offset supérieure à une limite absolue d'offset déterminée par la norme et à calculer, à partir de la connaissance de ces émissions, l'émission comportant zéro ou plusieurs instants décalés de montée ou de descente de chaque bit codé en Manchester permettant d'obtenir l'offset moyen le plus faible sur l'ensemble des mots standards.

## Patentansprüche

1. Verfahren zum Kompensieren eines Ausgangsversatzes eines elektronischen Sende-/Empfangsgeräts, das gemäß einem Kommunikationsstandard arbeitet, wobei das Kompensationsverfahren die folgenden Schritte beinhaltet:
- Schritt 1: da der Standard Standardwörter definiert, die aus Manchester-Code-Bits bestehen, für jedes Standardwort, Erzeugen einer Folge von Sendungen des Wortes durch Verschieben, für jede Sendung, von null oder mehreren Anstiegs- oder Abfallzeitpunkten (T/2+α) jedes Bits, wobei die Verschiebung α des Anstiegs- oder Abfallzeitpunkts einen konstanten Wert hat und vom Bit unabhängig ist;
- Schritt 2: Bestimmen der Sendung, die null oder mehrere verschobene Anstiegs- oder Abfallzeitpunkte jedes Manchester-Code-Bits enthält, so dass der niedrigste durchschnittliche Versatz (V_{offset}) über die Gesamtheit der Standardwörter erhalten werden kann;
- Schritt 3: Speichern der Anstiegs- oder Abfallverschiebungen (α) in dem elektronischen Gerät, so dass diese Anstiegs- oder Abfallverschiebungen auf die Ausgangssignale angewendet werden, wenn das elektronische Gerät betriebsfähig ist.

2. Verfahren zum Kompensieren eines Ausgangsversatzes nach Anspruch 1, **dadurch gekennzeichnet, dass** Schritt 2 darin besteht, für jede Sendung den dieser Sendung entsprechenden Versatz zu messen und auf der Basis der Kenntnis dieser Versätze die Sendung, die null oder mehrere verschobene Anstiegs- oder Abfallzeitpunkte jedes Manchester-Code-Bits enthält, zu berechnen, so dass der niedrigste durchschnittliche Versatz über die Gesamtheit der Standardwörter erhalten werden kann.

3. Verfahren zum Kompensieren eines Ausgangsversatzes nach Anspruch 1, **dadurch gekennzeichnet, dass** Schritt 2 darin besteht, für jedes Standardwort die Sendung oder Sendungen zu bestimmen, die einen absoluten Versatzwert ergeben, der größer als eine vom Standard bestimmte absolute Versatzgrenze ist, und auf der Basis der Kenntnis dieser Sendungen die Sendung, die null oder mehrere verschobene Anstiegs- oder Abfallzeiten jedes Manchester-Code-Bits einschließt, zu berechnen, so dass der niedrigste durchschnittliche Versatz über die Gesamtheit der Standardwörter erhalten werden kann.

4. Verfahren zum Kompensieren eines Ausgangsversatzes nach einem der vorherigen Ansprüche, **dadurch gekennzeichnet, dass** eine fehlende Verschiebung des Anstiegs- oder Abfallzeitpunkts eines Bits einer Anstiegs- oder Abfallzeit genau in der Mitte der Dauer des Bits entspricht, und eine vorhandene Verschiebung einer Anstiegs- oder Abfallzeit eines Bits einer konstanten zeitlichen Verschiebung in Bezug auf die Mitte entspricht, wobei diese zeitliche Verschiebung entweder vor oder nach der Mitte der Dauer des Bits bewirkt wird.

5. Verfahren zum Kompensieren eines Ausgangsversatzes nach einem der vorherigen Ansprüche, **dadurch gekennzeichnet, dass** sich für jedes in Schritt 1 gesendete Standardwort jede Sendung von der vorherigen um nur eine einzige Verschiebung einer Anstiegs- oder Abfallzeit unterscheidet.

6. Verfahren zum Kompensieren eines Ausgangsversatzes nach einem der vorherigen Ansprüche, **dadurch gekennzeichnet, dass** nur die Datenbits gesendeter Nachrichten Verschiebungen von ihren Anstiegs- oder Abfallzeitpunkten aufweisen, wobei die Synchronisationsbits und das Paritätsbit unverändert sind, d.h. die Anstiegs- oder Abfallzeit dieser Synchronisations- oder Paritätsbits genau in der Mitte der Dauer des Bits liegt.

7. Verfahren zum Kompensieren eines Ausgangsversatzes nach einem der vorherigen Ansprüche, **dadurch gekennzeichnet, dass** der Kommunikationsstandard MIL-STD 1553 ist.

8. Kalibrierungsbank, die ausgelegt ist zum Durchführen eines Verfahrens zum Kompensieren eines Ausgangsversatzes eines elektronischen Sende-/Empfangsgerätes, das nach einem Kommunikationsstandard arbeitet, wobei die Kalibrierungsbank Folgendes umfasst:
- erste Mittel zum Erzeugen von durch den Standard definierten Standardwörtern, wobei jedes Wort aus Manchester-Code-Bits zusammengesetzt ist;
- zweite Mittel zum Verschieben des Anstiegs- oder Abfallzeitpunkts (T/2+α) jedes Manchester-Code-Bits, wobei die Bitdauer konstant bleibt und die Verschiebung α des Anstiegs- oder Abfallzeitpunkts einen konstanten, vom Bit unabhängigen Wert hat;
- dritte Mittel zum Bestimmen der Sendung, die null oder mehrere verschobene Anstiegs- oder Abfallzeitpunkte jedes Manchester-Code-Bits enthält, so dass der niedrigste durchschnittliche Versatz (V_{offset}) über die Gesamtheit der Standardwörter erhalten werden kann;
- vierte Mittel zum Berechnen und Speichern der Verschiebungsparameter (α), so dass der Versatz minimiert werden kann.

9. Kalibrierungsbank nach Anspruch 8, **dadurch gekennzeichnet, dass** die dritten Mittel darin bestehen, für jede Sendung den dieser Sendung entsprechenden Versatz zu messen und auf der Basis der Kenntnis dieser Versätze die Sendung, die null oder mehrere verschobene Anstiegs- oder Abfallzeitpunkte jedes Manchester-Code-Bits enthält, zu berechnen, so dass der niedrigste durchschnittliche Versatz über die Gesamtheit der Standardwörter erhalten werden kann.

10. Kalibrierungsbank nach Anspruch 8, **dadurch gekennzeichnet, dass** die dritten Mittel darin bestehen, für jedes Standardwort die Sendung oder Sendungen zu bestimmen, die einen absoluten Versatzwert ergeben, der größer ist als eine von dem Standard bestimmte absolute Versatzgrenze, und auf der Basis der Kenntnis dieser Sendungen die Sendung, die null oder mehrere verschobene Anstiegs- oder Abfallzeitpunkte jedes Manchester-Code-Bits enthält, zu berechnen, so dass der niedrigste durchschnittliche Versatz über die Gesamtheit der Standardwörter erhalten werden kann.

## Claims

1. A method for compensating an output offset of an electronic transmission/reception device operating according to a communications standard, the compensation method comprising the following steps:
- step 1: the standard defining standard words made up of Manchester encoded bits and, for each standard word, generating a series of transmissions of said word by shifting, for each transmission, zero or a plurality of rising or falling instants (T/2+*α*) of each bit, the shift *α* of the rising or falling instant having a value that is constant and independent of the bit;
- step 2: determining the transmission comprising zero or a plurality of shifted rising or falling instants of each Manchester encoded bit allowing the lowest average offset (V_{offset}) to be obtained on all the standard words;
- step 3: storing said rising or falling shifts (*α*) in the electronic device so that these rising or falling shifts are applied to the output signals when the electronic device is operational.

2. The method for compensating an output offset according to claim 1, **characterised in that** step 2 involves measuring, for each transmission, the offset corresponding to this transmission and computing, based on the knowledge of these offsets, the transmission comprising zero or a plurality of shifted rising or falling instants of each Manchester encoded bit allowing the lowest average offset to be obtained on all the standard words.

3. The method for compensating an output offset according to claim 1, **characterised in that** step 2 involves determining, for each standard word, the transmission or the transmissions providing an absolute offset value that is greater than an absolute offset limit determined by the standard and computing, based on the knowledge of these transmissions, the transmission comprising zero or a plurality of shifted rising or falling instants of each Manchester encoded bit allowing the lowest average offset to be obtained on all the standard words.

4. The method for compensating an output offset according to any one of the preceding claims, **characterised in that** the absence of a shift of the rising or falling instant of a bit corresponds to a rising or falling time located exactly at the centre of the duration of the bit, and **in that** the presence of a shift of a rising or falling time of one bit corresponds to a constant temporal offset in relation to said centre, said temporal offset being implemented either before or after the centre of the duration of the bit.

5. The method for compensating an output offset according to any one of the preceding claims, **characterised in that**, for each standard word transmitted in step 1, each transmission differs from the preceding transmission by one and only one shift of a rising or falling time.

6. The method for compensating an output offset according to any one of the preceding claims, **characterised in that** only the data bits of transmitted messages comprise shifts of the rising or falling instants thereof, the synchronisation bits and the parity bit being unchanged, i.e. the rising or falling time of these synchronisation or parity bits is located exactly at the centre of the duration of the bit.

7. The method for compensating an output offset according to any one of the preceding claims, **characterised in that** the communications standard is standard MIL-STD 1553.

8. A calibration test bench adapted to implement a method for compensating an output offset of an electronic transmission/reception device operating according to a communications standard, said inspection test bench comprising:
- first means for generating standard words defined by the standard, with each word being made up of Manchester encoded bits;
- second means for shifting the rising or falling instant (T/2+*α*) of each Manchester encoded bit, with the duration of the bit remaining constant, the shift *α* of the rising or falling instant having a value that is constant and independent of the bit;
- third means for determining the transmission comprising zero or a plurality of shifted rising or falling instants of each Manchester encoded bit allowing the lowest average offset (V_{offset}) to be obtained on all the standard words;
- fourth means for computing and storing shift parameters (*α*) allowing the offset to be minimised.

9. The calibration test bench according to claim 8, **characterised in that** the third means involve measuring, for each transmission, the offset corresponding to this transmission and computing, based on the knowledge of these offsets, the transmission comprising zero or a plurality of shifted rising or falling instants of each Manchester encoded bit allowing the lowest average offset to be obtained on all the standard words.

10. The calibration test bench according to claim 8, **characterised in that** the third means involve determining, for each standard word, the transmission or the transmissions providing an absolute offset value that is greater than an absolute offset limit determined by the standard and computing, based on the knowledge of these transmissions, the transmission comprising zero or a plurality of shifted rising or falling instants of each Manchester encoded bit allowing the lowest average offset to be obtained on all the standard words.
